(19) Europäisches Patentamt

European Patent Office

Office européen des brevets

(11) Publication number: **0 234 771 B1**

# (12) EUROPEAN PATENT SPECIFICATION

(45) Date of publication of patent specification: **23.10.91** (51) Int. Cl.⁵: **C02F 1/20**

(21) Application number: **87300941.9**

(22) Date of filing: **03.02.87**

(54) Method and apparatus for treating liquid/gas mixtures.

(30) Priority: **13.02.86 NO 860520**

(43) Date of publication of application:
**02.09.87 Bulletin 87/36**

(45) Publication of the grant of the patent:
**23.10.91 Bulletin 91/43**

(84) Designated Contracting States:
**AT BE CH DE ES FR GB GR IT LI LU NL SE**

(56) References cited:
**WO-A-83/02402**
**WO-A-85/00298**
**US-A- 4 017 276**

(73) Proprietor: **NORSK HYDRO A/S**
**Bygdoy Allé 2**
**N-0257 Oslo 2(NO)**

(72) Inventor: **Henriksen, Norolf**
**Rudgdevn. 9**
**NO-3670 Notodden(NO)**

(74) Representative: **Allen, Oliver John Richard et al**
**Lloyd Wise, Tregear & Co. Norman House**
**105-109 Strand**
**London, WC2R 0AE(GB)**

**Description**

The present invention relates to the treatment of and mass transfer in mixtures of liquid and gases.

In such methods, liquid and gas are brought in contact with each other to provide mass transfer between the phases. Subsequently the phases are separated.

In International Patent Application No. WO83/02402, inert gas is brought into contact with liquid under high pressure to obtain intimate contact with the inert gas. The mixture is then passed through an inlet pipe and out of a nozzle into a desorption tube, which has an abruptly changing cross section. As a result of the reduction in pressure at each abrupt change in cross section, dissolved gas comes out of solution and forms bubbles.

In Norwegian Patent No. 152,209, a method is disclosed where an inert gas is employed to separate an unwanted gas from a gas/liquid mixture by stripping. The inert gas is separated from the liquid, regenerated and purified in the gaseous state by means of a catalyst and thereafter recirculated. The liquid is transported by simultaneously pumping and stripping, utilizing a so-called "gas lift effect" through a vertical tube.

Utilizing the gas lift principle for pumping and mass transfer in a vertical tube, a flow pattern for gas and liquid is created and this pattern will vary within the tube. By choosing an optimal gas volume to obtain satisfactory mass transfer in a tube of length 100 m, it was found that an increase in the amount of gas beyond the optimal functioning of the gas lift effect was not advantageous. A further increase of the gas volume resulted in ring flow in significant areas of the tube and effectively reduced the total liquid flow and the gas lift effect. Therefore it is not possible to choose gas/liquid ratios which result in simultaneous optimal mass transfer and efficient pumping.

In accordance with one aspect of the invention, a method for treating a mixture of a liquid and a first gas to separate the first gas from the liquid by mass transfer with a second gas, the mixture and the second gas being passed in co-current flow through treatment zones of a plurality of treatment stages, during which mass transfer occurs between the first and second gases and the liquid, the mixture and the second gas being passed into gas-liquid separators of corresponding ones of the treatment stages characterised by providing the treatment zones as unobstructed tubular members of constant diameter, pumping the liquid in a downstream direction through the treatment stages and separators pumping pure second gas into the treatment zone of the downstream treatment stage, and thereby effecting mass transfer therein, pumping the gases separated in each gas-liquid separator except the most upstream gas-liquid separator in an upstream direction to the treatment zone of an upstream treatment stage and controlling the pumping of the pure second gas and the pumping of the separated gases separately and independently of the pumping of the liquid, and thereby controlling separately the amounts and velocities of the liquid and the second gas in the treatment zones.

In accordance with another aspect of the invention, apparatus for treating a mixture of a liquid and a first gas to separate the first gas from the liquid by mass transfer with a second gas, said apparatus including a plurality of treatment stages each including a treatment zone through which are passed in co-current flow the mixture and the second gas, during which mass transfer occurs between the first and second gases, and a gas-liquid separator within which the liquid is separated from the gases characterised by each treatment zone being in the form of an unobstructed tube-shaped member of constant diameter, means for pumping the liquid in a downstream direction through the treatment stages, means for pumping pure second gas into the treatment zone of the downstream treatment stage, whereby mass transfer is effected therein and means for pumping the gases separated in each gas-liquid separator except the most upstream gas-liquid separator, in an upstream direction to the treatment zone of an upstream treatment stage, whereby mass transfer is effected therein, the means for pumping the pure second gas and means for pumping the separated gases being controlled separately and independently of the means for pumping the liquid, thereby controlling separately the amounts and velocities of the liquid and the second gas in the treatment zones.

Such provides a method and apparatus for gas/liquid treatment whereby conditions are established for gas/liquid contacts which allow the choice of gas/liquid ratios to give a desired liquid flow rate and simultaneous optimal mass transfer.

Such also provides a multi-stage method and apparatus utilizing a gasflow from one stage to the next in counterflow to the liquid, thus reducing the circulating gas volume and increasing the relative amount of mass transfer in the gas.

Such finally also provides a gas recirculation stage with heat exchange, thereby allowing the regulation and control of the temperature in a catalyst which is used for regeneration and purification of the circulating gas. Hereby a greater freedom in the choice of the temperature in the catalyst bed is obtained.

2

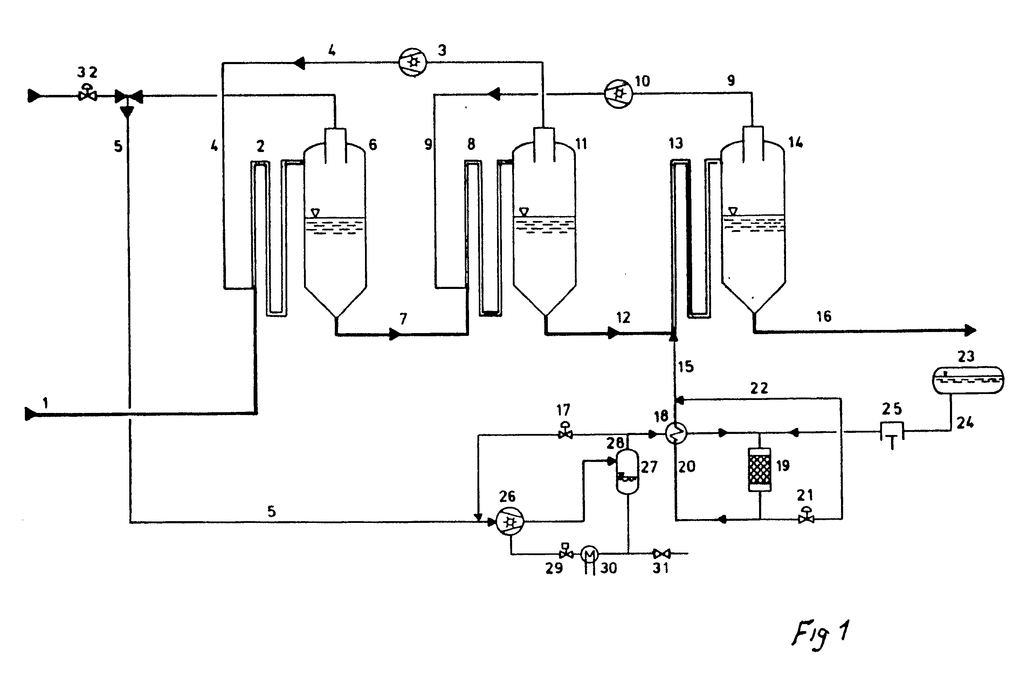

The invention will now be described by way of example, with reference to the accompanying drawing, in which:-

Figure I shows a general outline or view of a system in accordance with the invention.

Figure I shows a multi-stage system which is used to remove oxygen from seawater utilizing nitrogen as a treating gas. Such a multi-stage system requires at least one compressor for gas circulation. Seawater containing oxygen is pumped by means of a conventional low pressure water pump or the like through a pipeline I to a first treatment stage (see 2 and 6).

Depending upon design parameters, the system may require the use of pumps for controlled supply of liquid in every treatment stage. Such pumps, however, are not shown in Figure I, which generally shows a schematic flow sheet. Each stage includes a tube unit 2, 8, 13 of constant diameter, and formed as a hair pin with vertical extending legs. The gas/liquid mixture leaves the tube unit 2 and enters a subsequent gas/liquid separator 6.

Gas from a subsequent treatment stage is pumped by means of a compressor 3 under pressure into the tube 2 through a pipeline 4. The gas/liquid mixture from the tube 2 thereafter enters the gas/liquid separator 6, where gas is separated in the upper part and seawater is collected in the lower part. The gas is led through a pipeline 5 to a gas purification- and recirculation system, which will be described in detail later. The seawater which is treated in the first stage is led through a pipeline 7 to the next treatment stage which consists of a tube unit 8 and a gas/liquid separator 11. This second treatment stage is similar to the first treatment stage, and the tube unit 8 is supplied with gas through a pipeline 9 coming from a compressor I0. The liquid/gas mixture is passed through the tube 8 to the subsequent liquid/gas separator 11. The separated gas is led, as mentioned above, back to the first treatment stage, while the liquid from the bottom of the separator is led through a pipeline I2 to a third tube unit I3 which is designed similarly to the previous tube units. At this stage, purified or otherwise treated gas is supplied through a pipeline I5. The tube unit I3 is connected to a third liquid/gas separator I4, and the treated purified liquid is led from the bottom of the separator I4 through a pipeline I6.

The positive pumping of the liquid through the different treatment stages and the circulation of gas by means of compressors 3 and I0, makes it possible both to return the gas to the tube units under pressure and to freely control or regulate the ratio of liquid/gas. If the pressure in the different separators are conveniently chosen, a compressor between each of the stages will not be necessary.

When the gas- and liquid streams are led through the tube units, they will mix efficiently because liquid and gas are pumped independently of each other and one has the freedom to choose liquid/gas ratios as well as optimal liquid/gas velocities. In practice this is achieved by regulating the liquid/gas ratios until near to ideal two-phase gas/liquid turbulent flow velocities are obtained. To ascertain that all the gas which is led into the last tube unit is completely purified and free of oxygen, the system is equipped with a gas recirculation system which includes a deoxidization unit with a precious metal catalyst.

The impure stripping gas is led through the pipeline 5 via a compressor 26, a gas/liquid separator 27 and a pipeline 28, to a heat exchanger I8 provided in a gas regenerating stage. This includes a catalyst unit I9 with a chamber filled with dry, granular catalyst containing active palladium or platina. Purified, regenerated treating gas is led via a pipeline 20 through the heat exchanger I8 and will thus give off heat which is tranferred to the incoming contaminated stripping gas which via the pipeline 28 is passed through the heat exchanger I8 to the catalyst unit I9. Purified gas can also be led directly to the tube I3 via a valve 2I and a separate pipeline 22. Such provides the possibility of accurately regulating the temperature of the contaminated gas which is to be purified by deoxidization. Pure hydrogen gas may be used for reaction with oxygen in the catalyst unit. To maintain gas pressure at the inlet end of compressor 26, a return line I7 with variable value is provided.

Since it is possible to regulate the temperature by means of the heat exchanger I8, and therefore to establish any desired temperature, reduction means other than hydrogen gas may be employed. Thus, Figure I shows a tank 23 containing liquid methanol which via a pipeline 24 and a level indicator 25 is led directly into the catalyst unit I9, where it reacts with the oxygen on the catalyst.

To remove salt containing vapour from the contaminated treatment gas, a scrubbing system is provided prior to the catalyst unit I9, wherein the gas is scrubbed by the liquid ring compressor 26 and led to the gas/liquid separator 27. The liquid is circulated via a liquid cooler 30 and a valve 29 back to the compressor 26.

Vapour which is condensed due to compression or cooling, is tapped off from the gas/liquid separator 27 through a valve 3I.

New fresh nitrogen or possibly air may be added to the system via a valve unit 32, to substitute the gas being absorbed by the treated water.

Example

To illustrate the efficiency of the stripping system shown in Figure I, the known gaslift system disclosed in Norwegian Patent No. 152,209 was compared with the system which is described above and shown in Figure I. Both systems were used to remove oxygen from seawater. The diameters of the treatment tubes were identical, and each system was supplied with pure nitrogen from the same source.

The following results were obtained with seawater:

|                      | Gaslift system | Hair pin system (one-stage) |
|----------------------|----------------|-----------------------------|
| Zone length, m       | 40             | 13                          |
| Residence time, sec. | 12             | 4                           |
| Result:              |                |                             |
| $O_2$-content        | 0,10 ppm       | 0,10 ppm                    |

Thus, compared to the gaslift treatment, the length of the treatment zone as well as the residence time may be reduced to a third, and the same efficiency obtained.

Compared to conventional stripping in filled towers or columns, the improvements are considerably greater, and in addition significant equipment weight savings are obtained.

The system of Figure I makes it possible to obtain and maintain conditions for gas/liquid treatment with practically unlimited interfacial interaction. Furthermore, liquid contaminants can be removed from a gas phase or gas contaminants removed from a liquid phase.

Additionally the system of Figure I can be utilized both for the removal of oxygen from a liquid phase and for the enrichment of oxygen to a liquid phase. In the latter case, oxygen is circulated through the system instead of inert gas. Other gases, like $CO_2$ and $H_{2S}$, can also be removed or can be added.

In an embodiment not shown in Figure I, a number of parallel tubes can be placed side by side functioning as a tube set. The tubes can be curved or undulated resulting in a wave- or sinuslike configuration. Additional mechanical pumps can also be employed to maintain the liquid velocities at the desired levels. Because the system gives possibility to increase the temperature in the gas/regeneration stage, also other reduction means than hydrogen, e.g. methanol or natural gas can be applied.

## Claims

1. A method for treating a mixture of a liquid and a first gas to separate the first gas from the liquid by mass transfer with a second gas, the mixture and the second gas being passed in co-current flow through treatment zones of a plurality of treatment stages, during which mass transfer occurs between the first and second gases and the liquid, the mixture and the second gas being passed into gas-liquid separators of corresponding zones of the treatment stages characterised by providing the treatment zones as unobstructed tubular members (2,8,13) of constant diameter, pumping the liquid in a downstream direction through the treatment stages and separators (6,11,14), pumping pure second gas into the treatment zone (13) of the downstream treatment stage, and thereby effecting mass transfer therein, pumping the gases separated in each gas-liquid separator (11,14), except the most upstream gas-liquid separator (6), in an upstream direction to the treatment zone of an upstream treatment stage and controlling the pumping of the pure second gas and the pumping of the separated gases separately and independently of the pumping of the liquid, and thereby controlling separately the amounts and velocities of the liquid and the second gas in the treatment zones (2,8,13).

2. A method as claimed in claim 1, characterised by regenerating the second gas separated in the most upstream gas-liquid separator (6), and supplying the thus regenerated second gas as pure second gas to the treatment zone (13) of the downstream treatment.

3. A method as claimed in Claim 2, characterised in that the regenerating step comprises pumping the gases separated in the most upstream gas-liquid separator (6), through a heat exchanger (18) in indirect heat exchange with heated regenerated second gas and then through a gas regeneration and purification system to form the heated regenerated second gas as the pure gas.

4. Apparatus for treating a mixture of a liquid and a first gas to separate the first gas from the liquid by mass transfer with a second gas, said apparatus including a plurality of treatment stages each including a treatment zone through which are passed in co-current flow the mixture and the second gas, during which mass transfer occurs between the first and second gases, and a gas-liquid separator within which the liquid is separated from the gases characterised by each treatment zone (2,8,13) being in the form of an unobstructed tube-shaped member of constant diameter, means for pumping the liquid in a downstream direction through the treatment stages, means for pumping pure second gas into the treatment zone (13) of the downstream treatment stage, whereby mass transfer is effected therein and means (3,10) for pumping the gases separated in each gas-liquid separator (11,14) except the most upstream gas-liquid separator (6), in an upstream direction to the treatment zone of an upstream treatment stage, whereby mass transfer is effected therein, the means for pumping the pure second gas and means (3,10) for pumping the separated gases being controlled separately and independently of the means for pumping the liquid, thereby controlling separately the amounts and velocities of the liquid and the second gas in the treament zones.

5. Apparatus as claimed in Claim 4, characterised by means for regenerating the second gas separated in the most upstream gas-liquid separator (6) and for supplying the thus regenerated second gas as the pure second gas to the treatment zone (13) of the downstream treatment stage.

6. Apparatus as claimed in Claim 5 characterised in that the regenerating means comprises heat exchanger means (18), gas regeneration and purification means (19), and means for pumping the gases separated in the most upstream gas-liquid separator (6) through the heat exchanger means in indirect heat exchange with heated regenerated second gas and then through said gas regeneration and purification means (19) for forming the heated regenerated second gas as the pure gas.

**Revendications**

1. Procédé de traitement d'un mélange de liquide et d'un premier gaz pour séparer le premier gaz du liquide par transfert global avec un deuxième gaz, le mélange et le deuxième gaz étant passés en débit co-courant par les zones de traitement d'une série de phases de traitement lors desquelles le transfert global a lieu entre le premier et le deuxième gaz et le liquide, le mélange et le deuxième gaz étant passés par deux séparateurs gaz-liquide des zones de phases de traitement correspondantes, caractérisé par des zones de traitement sous forme d'appareils tubulaires sans obstruction (2, 8, 13) de diamètre constant, qui pompent le liquide en sens aval à travers les phases de traitement et les séparateurs (6, 11, 14), pompant le deuxième gaz pur dans la zone de traitement (13) de phase de traitement en aval, effectant ainsi le transfert global, pompant les gaz séparés dans chaque séparateur de gaz-liquide (11-14), sauf le séparateur de gaz-liquide le plus en amont (6), en sens amont vers la zone de traitement d'une phase traitement en amont et assurant la commande de pompage du deuxième gaz pur et le pompage des gaz séparés de manière séparée et indépendente du pompage de liquide, assurant ainsi la commande séparée des volumes et vitesses du liquide et du deuxième gaz dans les zones de traitement (2, 8, 13).

2. Méthode selon la revendication 1, caractérisée par la régénération du deuxième gaz séparé dans le séparateur de gaz-liquide le plus en amont (6), et le débit du deuxième gaz ainsi régénéré comme gaz pur étant prévu comme deuxième gaz pur pour la zone de traitement (13) du traitement en aval.

3. Méthode selon la revendication 1, caractérisée en ce que la phase de régénération comporte le pompage des gaz séparés dans le séparateur gaz-liquide situé le plus en amont (6), à travers un échangeur de chaleur (18) en échange indirect avec le deuxième gaz chauffé régénéré, puis par un système de régénération et d'épuration pour obtenir comme gaz pur le deuxième gaz chauffé régénéré.

4. Appareil de traitement d'un mélange de liquide et de premier gaz pour séparer le premier gaz du liquide par transfert global avec un deuxième gaz, ledit appareil ayant une série de phases de traitement chacune avec une zone de traitement dans laquelle le mélange et le deuxième gaz passent en co-courant, effectuant le transfert entre le premier et deuxième gaz, et un séparateur gaz-liquide dans lequel le liquide est séparé des gaz, caractérisé par chaque zone de traitement (2, 8,13) sous forme d'élément tubulaire sans obstruction de diamètre constant, des moyens de pompage en aval du liquide par les phases de traitement, des moyens de pompage du deuxième gaz pur dans la zone de traitement (13) de phase de traitement en aval, y effectuant ainsi le transfert global, et des moyens de pompage (3, 10) des gaz séparés en chaque séparateur de gaz-liquide (11-14), sauf le séparateur gaz-liquide (6) situé le plus en amont, y effectuant le transfert global, les moyens de pompage du deuxième gaz pur et les moyens (3, 10) de pompage des gaz séparés étant sous commande séparée et indépendante par rapport aux moyens de pompage de liquide, y assurant ainsi la commande séparée des volumes et vitesses de liquide et du deuxième gaz dans les phases de traitement.

5.  Appareil selon la Revendication 4, caractérisé par des moyens de régénération du deuxième gaz séparé dans le séparateur gaz-liquide (6) le plus en amont et d'apport du deuxième gaz ainsi régénéré comme deuxième gaz pur de zone de traitement (13) de la phase aval de traitement.

6.  Appareil selon la Revendication 5, caractérisé en ce que les moyens de régénération comportent des moyens échangeurs de chaleur (18), régénérateurs et épurateurs de gaz (19), et des moyens de pompage des gaz séparés dans le séparateur gaz-liquide (6) situé le plus en amont par la voie de moyens échangeurs en échange indirect de chaleur avec le deuxième gaz chauffé régénéré puis par lesdits moyens de régénération et d'épuration de gaz (19) traitant en gaz pur le deuxième gaz chauffé régénéré.

## Patentansprüche

1.  Verfahren zur Behandlung einer Mischung einer Flüssigkeit und eines ersten Gases, um das erste Gas von der Flüssigkeit durch Stoffaustausch mit einem zweiten Gas zu trennen, wobei die Mischung und das zweite Gas in Parallelstrom durch Behandlungszonen einer Vielzahl von Behandlungsstufen gebracht werden, während Stoffaustausch zwischen den ersten und zweiten Gasen und der Flüssigkeit stattfindet, wobei die Mischung und das zweite Gas in Gas-Flüssigkeitsabscheider entsprechender Zonen der Behandlungsstufen gebracht werden, gekennzeichnet durch Vorsehen der Behandlungszonen als unbehinderte röhrenförmige Glieder (2,8,13) konstanten Durchmessers, Pumpen der Flüssigkeit in eine Richtung stromab durch die Behandlungsstufen und Abscheider (6,11,14), Pumpen reinen zweiten Gases in die Behandlungszone (13) der stromab liegenden Behandlungsstufe, und dabei Bewirkung von Stoffaustausch darin, Pumpen der getrennten Gase in jeden Gas-Flüssigkeitsabscheider (11,14) ausser dem am meisten stromauf liegenden Gas-Flüssigkeitsabscheider (6) in eine Richtung stromauf zu der Behandlungszone einer stromauf liegenden Behandlungsstufe und Kontrollieren des Pumpens des reinen zweiten Gases und des Pumpens der getrennten Gase getrennt und unabhängig von dem Pumpen der Flüssigkeit, und dabei getrenntes Kontrollieren der Mengen und Geschwindigkeiten der Flüssigkeit und des zweiten Gases in den Behandlungszonen (2,8,13).

2.  Verfahren nach Anspruch 1, gekennzeichnet durch Regenerieren des zweiten, in dem am meisten stromauf liegenden Gas-Flüssigkeitsabscheider (6) getrennten Gases, und Liefern des so regenerierten zweiten Gases als reines zweites Gas zu der Behandlungszone (13) der stromab liegenden Behandlung.

3.  Verfahren nach Anspruch 2, dadurch gekennzeichnet, dass die Regenerierungsstufe umfasst, die in dem am meisten stromauf liegenden Gas-Flüssigkeitsabscheider (6) getrennten Gase durch einen Wärmeaustauscher (18) in indirektem Wärmeaustausch mit erhitztem regenerierten zweiten Gas zu pumpen, und dann durch ein Gasregenerations- und Reinigungssystem, um das erhitzte regenerierte zweite Gas als reines Gas zu bilden.

4.  Vorrichtung zur Behandlung einer Mischung einer Flüssigkeit und eines ersten Gases, um das erste Gas von der Flüssigkeit durch Stoffaustausch mit einem zweiten Gas zu trennen, wobei die Vorrichtung eine Vielzahl von Behandlungsstufen einschliesst, die je eine Behandlungszone einschliessen, durch welche die Mischung und das zweite Gas in Parallelstrom gebracht werden, während Stoffaustausch zwischen den ersten und zweiten Gasen stattfindet, und einen GasFlüssigkeitsabscheider, in welchem die Flüssigkeit von den Gasen getrennt wird, gekennzeichnet dadurch, dass jede Behandlungszone (2,8,13) in der Gestalt eines unbehinderten röhrenförmigen Gliedes konstanten Durchmessers ist, einem Mittel zum Pumpen der Flüssigkeit in eine Richtung stromab durch die Behandlungsstufen, einem Mittel zum Pumpen reinen zweiten Gases in die Behandlungszone (13) der stromab liegenden Behandlungsstufe, wobei Stoffaustausch darin bewirkt wird, und einem Mittel (3,10) zum Pumpen der Gase getrennt in jeden Gas-Flüssigkeitsabscheider (11,14) ausser den am meisten stromauf liegenden Gas-Flüssigkeitsabscheider (6) in eine Richtung stromauf zu der Behandlungsstufe einer stromauf liegenden Behandlungsstufe , wobei Stoffaustausch darin bewirkt wird, wobei das Mittel zum Pumpen des reinen zweiten Gases und Mittel (3,10) zum Pumpen der getrennten Gase getrennt und unabhängig von dem Mittel zum Pumpen der Flüssigkeit kontrolliert werden, dabei getrenntes Kontrollieren der Mengen und Geschwindigkeiten der Flüssigkeit und des zweiten Gases in den Behandlungsstufen.

5. Vorrichtung nach Anspruch 4, gekennzeichnet durch Mittel zum Regenerieren des zweiten Gases, das in dem am meisten stromauf liegenden Gas-Flüssigkeitsabscheider (6) getrennt wird, und zum Liefern des so regenerierten zweiten Gases als reines zweites Gas zu der Behandlungszone (13) der stromab liegenden Behandlungsstufe.

6. Vorrichtung nach Anspruch 5, dadurch gekennzeichnet, dass das Regenerierungsmittel ein Wärmeaustauschmittel (18) enthält, Gasregenerations- und Reinigungsmittel (19), und Mittel zum Pumpen der getrennten Gase in den am meisten stromauf liegenden Gas-Flüssigkeitsabscheider (6) durch das Wärmeaustauschmittel in indirektem Wärmeaustausch mit erhitztem regeneriertem zweiten Gas und dann durch das Gasregenerations- und Reinigungsmittel (19), um das erhitzte regenerierte zweite Gas als reines Gas zu bilden.

Fig 1